(19) Europäisches Patentamt
European Patent Office
Office européen des brevets

(11) **EP 4 033 324 B1**

(12) **EUROPEAN PATENT SPECIFICATION**

(45) Date of publication and mention
of the grant of the patent:
**01.05.2024 Bulletin 2024/18**

(21) Application number: **20865409.5**

(22) Date of filing: **17.09.2020**

(51) International Patent Classification (IPC):
**G05D 1/02** *(2020.01)*    **G01S 17/89** *(2020.01)*
**G01S 17/931** *(2020.01)*    **G06V 20/10** *(2022.01)*
**G06V 20/58** *(2022.01)*    **G06V 30/18** *(2022.01)*

(52) Cooperative Patent Classification (CPC):
**G05D 1/0251; G01S 17/89; G01S 17/931;
G06V 20/10; G06V 20/58; G06V 30/1801**

(86) International application number:
**PCT/CN2020/115818**

(87) International publication number:
**WO 2021/052403 (25.03.2021 Gazette 2021/12)**

(54) **OBSTACLE INFORMATION SENSING METHOD AND DEVICE FOR MOBILE ROBOT**

VERFAHREN UND VORRICHTUNG ZUR ERFASSUNG VON HINDERNISINFORMATION FÜR EINEN MOBILEN ROBOTER

PROCÉDÉ ET DISPOSITIF DE DÉTECTION D'INFORMATIONS D'OBSTACLE POUR ROBOT MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2019 CN 201910892943**

(43) Date of publication of application:
**27.07.2022 Bulletin 2022/30**

(73) Proprietor: **Hangzhou Hikrobot Co., Ltd.
Hangzhou, Zhejiang 310051 (CN)**

(72) Inventors:
• **LONG, Xuexiong
Hangzhou, Zhejiang 310051 (CN)**

• **LI, Jianyu
Hangzhou, Zhejiang 310051 (CN)**

(74) Representative: **BRP Renaud & Partner mbB
Rechtsanwälte Patentanwälte
Steuerberater
Königstraße 28
70173 Stuttgart (DE)**

(56) References cited:
**WO-A1-2018/054080    WO-A1-2019/026715
CN-A- 106 969 770    CN-A- 108 256 430
CN-A- 108 733 045    CN-A- 109 048 926
CN-A- 109 947 097    CN-A- 110 202 577
CN-A- 110 202 577    US-A1- 2005 131 581**

## Description

The present application claims the priority to a Chinese patent application No. 201910892943.2, filed with the China National Intellectual Property Administration on September 20, 2019 and entitled "OBSTACLE INFORMATION SENSING METHOD AND DEVICE FOR MOBILE ROBOT".

## Technical Field

The present application relates to the field of robot positioning and navigation, and in particular to obstacle information sensing method and device for a mobile robot.

## Background

The commonly used sensing methods for sensing obstacles for a mobile robot include ultrasound, infrared and laser. The uultrasound cannot sense the exact location and range of obstacles; the infrared can only sense a single direction; two-dimensional laser can sense detailed obstacle information in the surrounding environment, but it can only sense the obstacles in its installation plane, and a low obstacle or a higher suspended obstacle relative to the installation plane cannot be sensed.

WO2018054080A1 discloses a method and device for updating a planned path of a robot, the method comprising: acquiring a current carrier coordinate in real time in a movement process of a robot, and converting the current carrier coordinate into a current global coordinate of the robot (S101); calculating a movement speed estimation and a position estimation of the robot moving to a next site according to the current global coordinate and a current movement speed (S102); acquiring a three-dimensional coordinate point of a pixel point in a depth image representing an obstacle in a surrounding environment of the robot, and converting the three-dimensional coordinate point into a two-dimensional coordinate point so as to obtain a projection outline of the obstacle in the surrounding environment of the robot (S103); acquiring an angular point of the obstacle in the surrounding environment according to the two-dimensional coordinate point (S104); and finally, updating a planned path of the robot according to the position estimation and the angular point of the obstacle (S105). Said method utilizes speed and position information which is acquired by a sensor of the robot so as to carry out accurate positioning and avoidance of the obstacle; calculation in the path updating process is decreased by means of the conversion of the three-dimensional coordinate into the two-dimensional coordinate, and response speed of the path update is improved.

CN1 10202577A provides an autonomous mobile robot capable of realizing obstacle detection, and a method thereof. The robot comprises a Kinect sensor, a depth information acquisition module, a first three-dimensional coordinate acquisition module, a coordinate conversion module, a grid map generation module and an obstacle distance generation module. The method comprises the steps of acquiring a depth image of a current environment through a vision sensor; determining a first three-dimensional coordinate based on a coordinate system of the vision sensor according to the depth information; projecting a second three-dimensional coordinate of an entity onto a two-dimensional grid map, and obtaining a two-dimensional coordinate of the solid; coinciding the two-dimensional grid map and a plane on which the bottom surface of the robot is located; and acquiring a position relation between the entity and the robot according to the two-dimensional coordinate. The autonomous mobile robot capableof realizing obstacle detection, and the method thereof provided by the invention solve the technical problem that obstacles cannot be accurately judged by the robot due to the adoption of an infrared sensor and an obstacle analysis method.

US20050131581A1 discloses an environment recognizing device and an environment recognizing method that can draw an environment map for judging if it is possible to move a region where one or more than one steps are found above or below a floor, a route planning device and a route planning method that can appropriately plan a moving route, using such an environment map and a robot equipped with such an environment recognizing device and a route planning device. The robot comprises an environment recognizing section including a plurality of plane extracting section 401 adapted to compute plane parameters from a parallax image or a distance image and extract a plurality of planes including the floor surface, an obstacle recognizing section 402 adapted to recognize obstacles on the plurality of planes including the floor surface and an environment map updating section 403 adapted to draw an environment map (obstacle map) for each of the planes on the basis of the result of recognition of the obstacle recognizing section 402 and update the existing environment maps and a route planning section 404 adapted to plan a route on the basis of the environment maps. The route planning section 404 selects a plane as route coordinate when an obstacle is found on it in the environment map of the floor surface but not found in the environment map of the plane.

The present application provides a method and device for sensing obstacle information for a mobile robot, which can sense obstacle information in a surrounding space stereoscopically.

The invention is set out in the subject of the independent claims. Preferred embodiments are set out in the subject of the dependent claims.

The present application provides a method for sensing obstacle information for a mobile robot, the method comprises:

acquiring depth image data;

converting the depth image data into data in a coordinate system of the mobile robot;

converting the data in the coordinate system of the mobile robot into a projection in a moving plane of the mobile robot to obtain two-dimensional data;

detecting the two-dimensional data within a range of a travel route of the mobile robot; and

obtaining the obstacle information based on the detected two-dimensional data.

wherein converting the depth image data into data in the coordinate system of the mobile robot, comprises:

for any pixel in the depth image data, acquiring three-dimensional point coordinates of the pixel in the coordinate system of the mobile robot through a camera external parameter, a depth value of the pixel, a camera internal parameter, and a coordinate value of the pixel, acquiring, after converting all pixels in the depth image data into three-dimensional point coordinates in the coordinate system of the mobile robot, a three-dimensional point cloud composed of three-dimensional points in the coordinate system of the mobile robot; wherein detecting two-dimensional data within the range of the travel route of the mobile robot, comprises: establishing a search window for detecting obstacles within the range of the travel route of the mobile robot, and searching for two-dimensional data within a range of the search window.

Optionally, obtaining three-dimensional point coordinates of the pixel in the coordinate system of the mobile robot through the camera external parameter, the depth value of the pixel, the camera internal parameter, and the coordinate value of the pixel, comprises:

obtaining, according to an external parameter of a depth camera, a transformation relationship matrix from the coordinate system of the mobile robot to a coordinate system of the depth camera;

calculating a product of the transformation relationship matrix, the depth value of the pixel, an inverse matrix of a camera internal parameter matrix and a matrix formed by pixel coordinate values, to obtain three-dimensional point coordinates of the pixel in the coordinate system of the mobile robot;

wherein, the matrix formed by the pixel coordinate values is $\begin{bmatrix} u \\ v \\ 1 \end{bmatrix}$, u and v are the coordinates of the pixel in an image coordinate system, respectively.

Optionally, converting the data in the coordinate system of the mobile robot into the projection in the moving plane of the mobile robot to obtain the two-dimensional data, comprises:

discarding, for any three-dimensional point coordinates in the coordinate system of the mobile robot, a coordinate value perpendicular to the moving plane of the mobile robot in the three-dimensional point coordinate, to obtain a two-dimensional projection of the three-dimensional point in the moving plane of the mobile robot; alternatively, setting the coordinate value perpendicular to the moving plane of the mobile robot in the three-dimensional point coordinates to 0, to obtain the two-dimensional projection of the three-dimensional point in the moving plane of the mobile robot;

obtaining, after converting all three-dimensional point coordinates in the mobile robot coordinate system into two-dimensional projections in the moving plane of the mobile robot, a two-dimensional point cloud composed of the two-dimensional projections.

Optionally, establishing the search window for detecting obstacles within the range of the travel route of the mobile robot, and searching for the two-dimensional data within the range of the search window, comprises:

establishing the search window in an advance direction of the mobile robot, wherein a relative location of the search window and the mobile robot is fixed,
obtaining the obstacle information based on the detected two-dimensional data, comprises:
detecting whether there is a two-dimensional point cloud within the range of the search window, and if yes, determining that an obstacle is detected.

Optionally, converting the data in the coordinate system of the mobile robot into the projection in the moving plane of the mobile robot to obtain the two-dimensional data, comprises:

screening converted data in the coordinate system of the mobile robot, and retaining data corresponding to an obstacle that may be contacted during a movement process;

converting the retained data corresponding to the obstacle that may be contacted during the movement process into the projection in the moving plane of the mobile robot to obtain the two-dimensional data.

Optionally, a carrying surface for the mobile robot is ground, and retaining the data corresponding to the obstacle that may be contacted during the movement process, comprises: a retaining three-dimensional point(s) with a z-value in the three-dimensional point coordinates in the coordinate system of the mobile robot greater than a first threshold and less than a second threshold.

The method further comprises:
determining, according to a location of the nearest obstacle in the search window, whether the mobile robot needs to avoid the obstacle, and if yes, triggering to obtain a passable area for the mobile robot to travel.

Obtaining the passable area for the mobile robot to travel, comprises:

taking a projection center of a body of the mobile robot on the carrying surface as a starting point to set at least one ray at equal angles, and taking a two-dimensional point on the ray that is closest to the starting point as a contour of the obstacle to obtain a two-dimensional point of the contour of the obstacle;

setting, for any two-dimensional point of the contour of the obstacle, an expansion circumference by taking the two-dimensional point as the center of a circle and an extension distance as a radius; obtaining two tangent lines passing through the starting point and tangent to the expansion circumference; taking an arc sandwiched between the two tangent lines as an expansion boundary of the two-dimensional point of the contour of the obstacle, wherein a central angle of the sandwiched arc is less than or equal to 180°, and the extension distance is at least the maximum distance between the projection center of the body of the mobile robot on the carrying surface and the contour;

obtaining the expansion boundaries of all two-dimensional points of the contour of the obstacle, taking an envelope of the expansion boundaries of all the two-dimensional points as an expansion contour, taking the expansion contour as a boundary to set an area on one side close to the mobile robot as the passable area, and an area on the other side as an impassable area.

Optionally, setting, for any two-dimensional point of the contour of the obstacle, the expansion circumference by taking the two-dimensional point as the center of the circle and the extension distance as the radius, comprises:

converting two-dimensional point coordinates of a current contour of the obstacle into polar coordinates;

determining, according to the converted polar coordinates and the extension distance, an equation of the expansion circumference in a polar coordinate system;

wherein obtaining the two tangent lines passing through the starting point and tangent to the expansion circumference, comprises:

determining, according to the equation of the expansion circumference in the polar coordinate system, a tangent line angle range for the expansion circumference of the two-dimensional point of the current contour of the obstacle;

wherein taking the arc sandwiched between the two tangent lines as the expansion boundary of the two-dimensional point of the contour of the obstacle, comprises:

within the tangent line angle range, substituting a set current polar angle value into the equation of the expansion circumference in the polar coordinate system, and solving radius vector values for an arc point; extracting a smaller value from the radius vector values to obtain polar coordinates of the arc point sandwiched by the tangent lines,

setting a next polar angle value, and returning to execute the step of substituting the set current polar angle value into the equation of the expansion circumference in the polar coordinate system, until the calculation of the arc coordinate point on an arc segment sandwiched by the tangent lines is completed;

forming the expansion boundary of the current two-dimensional point based on the arc point.

Optionally, taking the projection center of the body of the mobile robot on the carrying surface as the starting point to set at least one ray at equal angles, further comprises: starting from a boundary of an image field of view and taking the projection center of the body of the mobile robot on the carrying surface as the starting point to take rays at equal angles to form grids,
wherein forming the expansion boundary of the current two-dimensional point based on the arc point, comprises:

taking, if there is no two-dimensional point of the expansion contour in a current grid, an arc coordinate point located in the grid among the calculated arc coordinate points as the two-dimensional point of the expansion contour for the grid;

determining, if there is a two-dimensional point of an existing expansion contour in the current grid, which from the arc coordinate point located in the grid among the arc coordinate points calculated and the two-dimensional point of the existing expansion contour is closer to the projection center of the body of the mobile robot on the carrying surface, and taking the point closer to the projection center as the two-dimensional point of the expansion contour for the grid;

taking the two-dimensional points of the expansion contours for all grids as the expansion boundary of the current two-dimensional points.

The present application provides a device for sensing obstacle information for a mobile robot, the device comprises:

a first data conversion module, configured for converting depth image data into data in a coordinate system of the mobile robot;

a second data conversion module, configured for converting the data in the coordinate system of the mobile robot into a projection in a moving plane of the mobile robot to obtain two-dimensional data;

a sensing module, configured for detecting the two-dimensional data within a range of a travel route of the mobile robot to obtain the obstacle information.

The present application further provides a mobile robot, a body of the mobile robot comprising:

a depth camera installed to the body of the mobile robot, configured for acquiring depth image data;

an obstacle sensing module, configured for converting the depth image data into data in a coordinate system of the mobile robot; converting the data in the coordinate system of the mobile robot into a projection in a moving plane of the mobile robot to obtain two-dimensional data; detecting the two-dimensional data in a range of a field of view of the mobile robot to obtain obstacle information;

a movement control module, configured for forming a movement instruction according to the obstacle information;

an actuator module, configured for executing the movement instruction.

The present application further provides a computer readable storage medium, wherein the computer readable storage medium stores thereon computer programs that, upon executed by a processor, cause the processor to implement steps of any one of the methods for sensing obstacle information for a mobile robot.

The present application further provides a computer program product comprising instructions which, when running on a computer, causes the computer to implement steps of any one of the methods for sensing obstacle information for a mobile robot.

It the present application, the depth image data may be converted into the projection in the moving plane of the mobile robot, and a search is performed based on the two-dimensional projection data to obtain obstacle information, and data similar to the two-dimensional laser is obtained, which solves the defects that conventional obstacle avoidance sensors cannot perform full stereo sensing and obstacle avoidance, and can sense obstacles in a large range and multi-levels. Different from the general method for processing depth data, the depth data is projected into the moving plane of the mobile robot, therefore in application, the mature technology for obstacle avoidance control in the two-dimensional environment can be widely used, not only the three-dimensional sensing information of the three-dimensional sensor can be used, but also a quick route planning can be performed based on the two-dimensional data.

## Brief Description of the Drawings

FIG. 1 is a flow diagram of sensing obstacle information based on depth image data according to an embodiment of the present application.

FIG. 2 is a schematic diagram of a mobile robot sensing the closest obstacle within an obstacle avoidance range through a search window.

FIG. 3 is a schematic diagram of sensing an contour of an obstacle.

FIG. 4 is a schematic diagram of an expansion contour.

FIG. 5 is a flow diagram of expanding a contour according to an embodiment of the present application.

FIG. 6 is a schematic diagram of a scene where a mobile robot is located.

FIG. 7 is a schematic diagram of a two-dimensional point cloud sensed based on depth image data of the scene shown in FIG. 6 and a contour expansion result determined based on the sensed two-dimensional point cloud.

FIG. 8 is a schematic diagram of an obstacle avoidance system for a mobile robot according to an embodiment of the present application.

FIG. 9 is a schematic diagram of an obstacle sensing module according to an embodiment of the present application.

## Detailed Description

Depth image data acquired by a depth camera is data to characterize a distance value between spatial points by means of a pixel gray value based on pixel coordinates, which may be expressed as p (u, v, d), where u and v are coordinates of a pixel in an image coordinate system. Specifically, u and v are a pixel row coordinate and a pixel column coordinate of the pixel in the depth image, respectively. d is a depth value of a spatial three-dimensional point corresponding to the pixel, where the depth value is also the distance value, that is, the distance between the spatial three-dimensional point corresponding to the pixel and the depth camera.

When the mobile robot moves in a plane, because obstacles between the ground and the highest point of the mobile robot may collide with the mobile robot, it is not necessary to consider the heights of these obstacles when planning the route of the mobile robot, that is, the information of the height direction of these obstacles is redundant for the movement of the mobile robot. A three-dimensional point set obtained by the depth camera is projected into a two-dimensional plane to obtain a two dimensional point set. Nto only the points of the obstacles is in the projection plane, the obstacle information of different height levels is preserved in the projection plane, thereby the obstacle information of the three-dimensional space environment is also preserved. In other words, the three-dimensional space information is preserved in the form of two-dimensional points. In this way, for a mobile robot moving in a plane, the route planning and control can be carried out in a two-dimensional plane, the processing complexity is reduced and responsiveness is improved.

Based on this, in the present application three-dimensional points within a certain height range in the depth image are converted into three-dimensional points of the coordinate system of the mobile robot according to the depth image data, and the three-dimensional points of the coordinate system of the mobile robot are reduced to a two-dimensional plane for processing; in the two-dimensional plane, the closest point on the polar coordinates is taken as the contour of the obstacle, and the data similar to the two-dimensional laser is obtained for obstacle avoidance, not only the three-dimensional sensing information of the three-dimensional sensor can be used, but also a route planning in the two-dimensional environment can be made.

An embodiment of the present application provides a method for sensing obstacle information for a mobile robot, the method includes:
acquiring depth image data; converting the depth image data into data in the coordinate system of the mobile robot; converting the data in the coordinate system of the mobile robot into a projection in a moving plane of the mobile robot to obtain two-dimensional data; detecting the two-dimensional data within a range of travel route of the mobile robot; and obtaining obstacle information based on the detected two-dimensional data.

It can be seen that in the solution according to the embodiment of the present application, the depth image data may be converted into the projection in the moving plane of the mobile robot, and a search is performed based on the two-dimensional projection data to obtain obstacle information, and data similar to the two-dimensional laser is obtained, which solves the defects that conventional obstacle avoidance sensors cannot perform full stereo sensing and obstacle avoidance, and can sense obstacles in a large range and multi-levels. On the other hand, the general method for processing depth data is to establish a three-dimensional model of the obstacle based on the depth data, different from the general method for processing depth data, in the embodiment of the present application, the depth data is projected into the moving plane of the mobile robot, so that the mature technology for obstacle avoidance control in the two-dimensional environment can be applied to the present application for projection to obtain two-dimensional data, so that the solution of the present application can be widely used. Therefore, in the solution of the present application, not only the three-dimensional sensing information of the three-dimensional sensor can be used, but also a quick route planning can be performed based on the two-dimensional data.

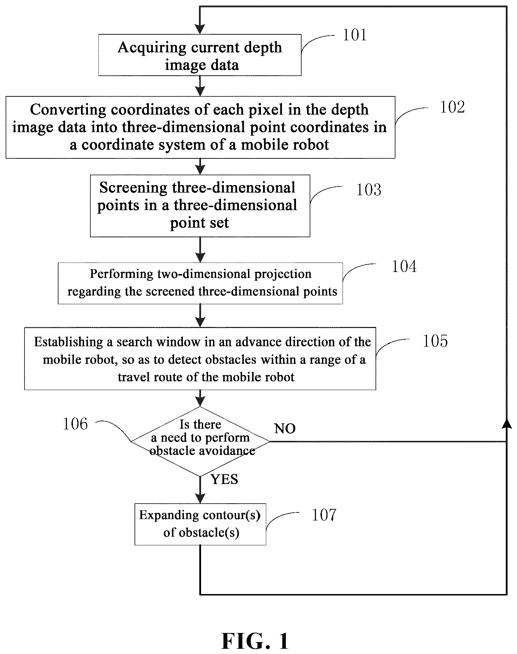

Referring to FIG. 1, FIG. 1 is a flow diagram of sensing obstacle information based on depth image data according to an embodiment of the present application.

Step 101, acquiring current depth image data;
In this step, the depth image data of the current physical space is obtained in real time by the depth camera installed to the body of the mobile robot, so as to obtain a dense depth map; the depth camera may be a depth camera based on stereo vision and a depth camera based on time of flight (TOF).

Step 102, converting coordinates (u, v, d) of each pixel in the depth image data into three-dimensional point coordinates in a coordinate system of the mobile robot, that is, converting the depth image data into data in the coordinate system of the mobile robot;
The origin of the coordinate system of the mobile robot coincides with the center of the mobile robot, the coordinate system of the mobile robot is the coordinate system of the robot body, and the advance direction of the robot is the x-axis, a direction which is on the same plane as the x-axis, perpendicular to the x-axis and to the left is the y-axis, and the direction perpendicular to the plane where the x-axis and y-axis are located is the z-axis. The plane where the x-axis and y-axis are located can be regarded as the moving plane of the mobile robot, which is parallel to the carrying surface for body of the mobile robot. For example, the carrying surface for body of the mobile robot is usually the ground, and the plane where the x-axis and the y-axis are located is parallel to the ground.

According to a relative pose of the depth camera and the coordinate system of the mobile robot, that is, an external parameter of the depth camera, a conversion relationship between the coordinate system of the mobile robot and the depth camera coordinate system may be obtained, the external parameter may be calibrated in advance, and the conversion relationship $A_{bc}$ may be represented as:

$$A_{bc} = \begin{bmatrix} R_{bc} & T_{bc} \\ 0 & 1 \end{bmatrix},$$

$R_{bc}$ is a rotation matrix between the depth camera coordinate system relative to the coordinate system of the mobile robot, which is a $3\times3$ matrix, and $T_{bc}$ is a displacement matrix between the depth camera coordinate system relative to the coordinate system of the mobile robot, which is a $3\times1$ matrix.

For each pixel (u, v, d) in the depth image data, coordinate transformation is performed to obtain the three-dimensional point coordinates $P_b$ (x, y, z) in the coordinate system of the mobile robot; after the coordinate transformation is performed on all the pixels in the depth image data, a three-dimensional point set is obtained, the set is also called three-dimensional point cloud.

The mathematical expression of coordinate transformation is:

$$P_b = A_{bc} d K^{-1} \begin{bmatrix} u \\ v \\ 1 \end{bmatrix}$$

d is a scalar, which is the depth value of the pixel, K is a camera internal parameter, where $\begin{bmatrix} u \\ v \\ 1 \end{bmatrix}$ is a matrix composed of pixel coordinate values, and u and v are a pixel row coordinate and a pixel column coordinate of the pixel in the depth image, respectively.

Step 103: screening three-dimensional points in a three-dimensional point set.

For a three-dimensional point converted to the robot coordinate system, it is usually necessary to distinguish whether it is a three-dimensional point on the ground, a three-dimensional point of the obstacle, or a three-dimensional point in the space above the robot, therefore, by setting the lower limit of height, the three-dimensional point on the ground can be eliminated, and by setting the upper limit of the height, the three-dimensional point in the space above the robot can be eliminated, so that the robot can walk under an object when necessary. After the screening is completed, the remaining three-dimensional points are all three-dimensional points corresponding to obstacles in the scene that may affect the movement of the mobile robot, including three-dimensional points on the robot's walking route and those not on the robot's walking route.

Specifically, a three-dimensional point with a coordinate z-value of the three-dimensional point greater than a first threshold and less than a second threshold may be retained, the first threshold is less than the second threshold. This is expressed mathematically that the three-dimensional point that satisfies the following formula is retained.

$$h_{low} < z < h_{high}$$

$h_{low}$ is the first threshold, and the specific value may be the difference between the z-value corresponding to the ground in the coordinate system of the mobile robot and the z-value of the origin coordinate. $h_{high}$ is the second threshold, and the specific value may be the difference between the z-value of the highest point of the mobile robot in the coordinate system of the mobile robot and the z-value of the origin coordinate. Through this step, the ground point cloud and the point cloud above the height of the mobile robot in the actual environment may be eliminated, and the point cloud corresponding to the obstacle(s) that may be contacted during the movement process is retained, so that the sensing of the obstacle is more accurate.

For a relatively open environment, since there are almost no three-dimensional point in the space above the robot, the screening of three-dimensional points may not be carried out.

Step 104, performing two-dimensional projection regarding the screened three-dimensional points.

Since the screened point cloud is still three-dimensional, and the screened point cloud is the point cloud corresponding to an obstacle that may be contacted by the mobile robot during the movement process of the mobile robot. That is, for a screened point cloud, no matter what information of the height direction it corresponds, it is always the point cloud corresponding to an obstacle that may be contacted by the mobile robot during the movement process of the mobile robot, so for the mobile robot moving in the plane, information of height direction for the screened point cloud may be considered as redundant information.

For any three-dimensional point coordinate $P_b$ (x, y, z) that is screened, the z-axis coordinate value in the coordinates may be discarded or set to 0, and only the coordinate values of x and y are retained, thereby obtaining a two-dimensional point coordinate $P_P$ (x, y) to perform a two-dimensional projection from the screened three-dimensional points.

The z-axis coordinate values of all screened three-dimensional point coordinates are discarded, or the z-axes of all screened three-dimensional point coordinates are set to 0, so as to acquire a two-dimensional point set for characterizing obstacles using two-dimensional points, thereby facilitating searching for a passable area for a robot.

Step 105, establishing a search window in an advance direction of the mobile robot, so as to detect obstacles within a range of a travel route of the mobile robot.

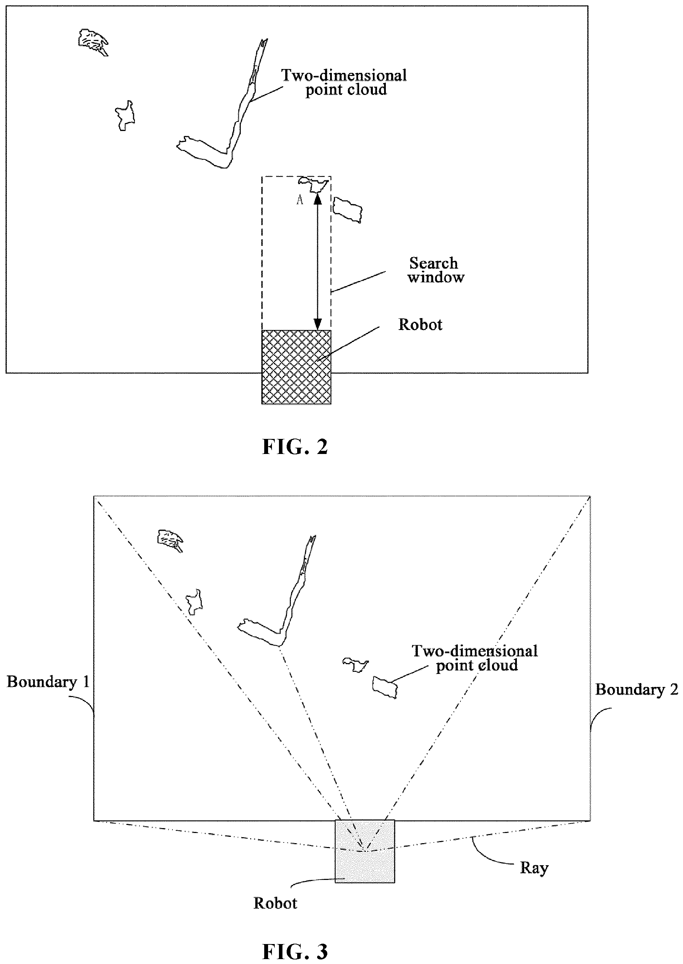

Referring to FIG. 2, FIG. 2 is a schematic diagram of a mobile robot sensing the closest obstacle within an obstacle avoidance range through a search window. The search window is three-dimensional, and the dotted frame is the projection of the search window on the moving plane, that is, the top view of the search window. The relative location of the search window (shown in the dotted line in FIG. 2) and the mobile robot is fixed, and the size of the section of the search window perpendicular to the traveling direction of the mobile robot is greater than or equal to the projection size of the mobile robot on this section. Optionally, the search window is a rectangular frame, and the length of the rectangular frame is set according to a required obstacle avoidance distance. The length of the rectangular frame is the length in the traveling direction of the mobile robot.

Optionally, the search window may also be a two-dimensional window, the plane where the window is located is parallel to the carrying surface for mobile robot, the shape of the search window may be a rectangle, the length of the rectangle is set according to the required obstacle avoidance distance, and the width of the rectangle is greater than or equal to a passable width of the body of the mobile robot in the advance direction. The length of the rectangle is the length in the traveling direction of the mobile robot.

When the mobile robot moves, it searches based on the two-dimensional point cloud within the range of the search window. If the mobile robot detects an obstacle within a certain distance, it needs to perform obstacle avoidance, where the certain distance is the obstacle avoidance range for the mobile robot. By detecting the position of the closest obstacle within the obstacle avoidance range, it may be determined whether the robot currently needs to perform deceleration, stop, or take other obstacle avoidance measures. The other obstacle avoidance measures may include turning, U-turn, etc.

In one implementation, a first distance threshold and a second distance threshold may be preset, and the first distance threshold is less than the second distance threshold. When the distance between the closest obstacle within the obstacle avoidance range and the mobile robot is detected not greater than the first distance threshold, the mobile robot may perform a parking action to avoid the obstacle. When the distance between the closest obstacle within the obstacle avoidance range and the mobile robot is detected greater than the second distance threshold, the mobile robot may not perform obstacle avoidance temporarily. When the distance between the closest obstacle within the obstacle avoidance range and the mobile robot is detected greater than the first distance threshold and not greater than the second distance threshold, the mobile robot may perform a deceleration action or take other obstacle avoidance measures for avoiding obstacles.

For example, as shown in FIG. 2, the two-dimensional point A in the search box is the two-dimensional point corresponding to the nearest obstacle to the mobile robot, and then according to the location of the two-dimensional point A, it may be determined whether the robot currently needs to perform deceleration, parking or take other obstacle avoidance measures.

Step 106, determining, according to a location of the nearest obstacle in the search window, whether the mobile robot needs to avoid obstacles, if yes, executing step 107, otherwise, returning to step 101.

Step 107, expanding contour(s) of obstacle(s).

If it is determined that the mobile robot needs to avoid obstacles, contour(s) of obstacle(s) may be expanded to form a passable area for the mobile robot to travel in real time, the contour is expanded based on extending a certain distance from sensed obstacle boundary, and an area enclosed by the extended obstacle boundary represents an impassable area, and the center of the mobile robot is disabled to appear in this area, otherwise a collision will occur. The distance that the obstacle boundary extends outward is at least the maximum distance between a projection center of the robot body on the carrying surface and the contour.

Specifically, the projection center of the body of the mobile robot on the carrying surface is taken as the starting point to make multiple rays, and the two-dimensional point(s) that are on the rays in the two-dimensional point cloud and are closest to the mobile robot are taken as the obstacle boundary to obtain two-dimensional points of the contour of the obstacle; the two-dimensional points of the contour are expanded to obtain the two-dimensional points of the expansion contour; the two-dimensional points of the expansion contour are taken as a boundary between the passable area and the impassable area for the mobile robot. Both the search window and the search box are referred as the search window.

Referring to FIG. 3, FIG. 3 is a schematic diagram of sensing an contour of an obstacle. Within the horizontal field of view of the depth camera and within the range formed by the boundary of the field of view, the projection center of the robot body on the carrying surface is taken as the starting point to make rays at equal angles to form a grid, the range formed by the boundary of the field of view in FIG. 3 is the range of the image from boundary 1 to boundary 2, only a few rays are shown in FIG. 3, but not all rays are shown. The two-dimensional point(s) on these rays and are closest to the projection center of the robot body on the carrying surface are taken as the obstacle boundary, that is, the contour of the obstacle. If there is no two-dimensional point on the rays, it means that there is no obstacle in the directions of the rays. The smaller the angle between the rays is, then the more two-dimensional points of the contour of the obstacle may be obtained, and the more accurate the determined contour of the obstacle is.

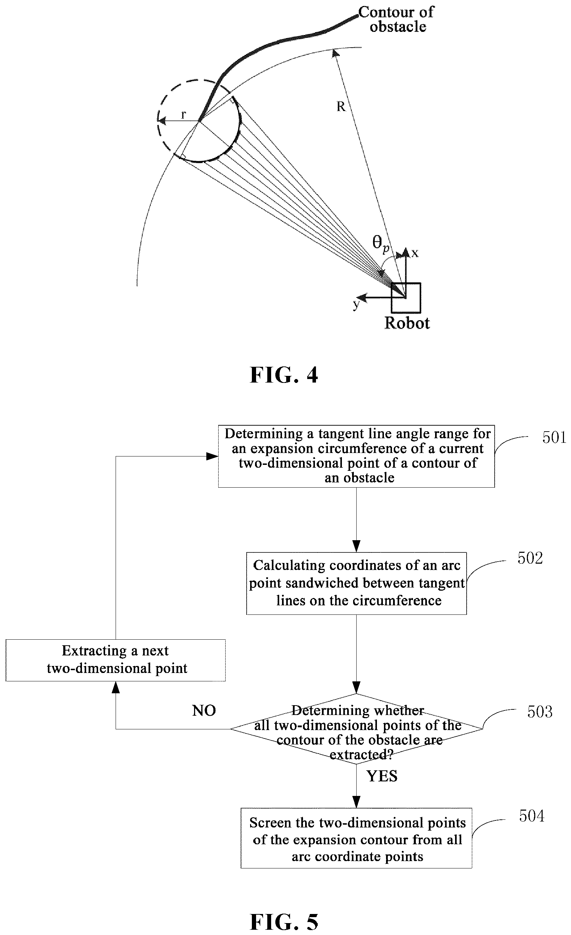

Referring to FIG. 4, FIG. 4 is a schematic diagram of an expansion contour. In the advance direction of the mobile robot, for any two-dimensional point on the contour of the obstacle, the two-dimensional point is taken as the center of a circle and an expanded extension distance is taken as the radius to form an expansion circumference, the arc sandwiched between the two tangent lines passing through the projection center of the robot body on the carrying surface and tangent to the expansion circumference is taken as an expansion boundary of two-dimensional point, a central angle of the sandwiched arc is less than or equal to 180°.

For all the two-dimensional points on the contour of the obstacle, the expansion circumferences are taken one by one and the arcs sandwiched between the tangent lines are taken one by one to obtain the expansion boundaries of all two-dimensional points. In one implementation, the envelope of the expansion boundaries of all two-dimensional points may be taken as the expanded contour, so as to obtain the passable area for the mobile robot to travel and the impassable area.

Referring to FIG. 5, FIG. 5 is a flow diagram of expanding a contour according to an embodiment of the present application. In conjunction with Fig. 4, the projection center of the robot body on the carrying surface is taken as the pole and the advance direction of the robot is taken as the polar axis, so as to establish a polar coordinate system;

Step 501: determining a tangent line angle range for an expansion circumference of a current two-dimensional point of a contour of obstacle.

It may specifically include: extracting the two-dimensional point $P_P$ (x, y) of the current contour of the obstacle, and converting it into the polar coordinates P (R, $\theta_p$);

According to the polar coordinates of the two-dimensional point and the radius r of the expansion circumference, the equation of the expansion circumference may be determined as:

$$\rho^2 - 2\rho R\cos(\theta - \theta_p) + R^2 = r^2$$

.

In order to solve the tangent lines of the circumference equation passing through the pole, let

$$\Delta = (2R\cos(\theta - \theta_p))^2 - 4(R^2 - r^2) = 0$$

,

the above formula is solved to obtain:

$$\theta = \pm\arccos\sqrt{1 - \frac{r^2}{R^2}} + \theta_p$$

.

Step 502: calculating coordinates of an arc point sandwiched between tangent lines on the circumference, specifically:

let the polar angle $\theta$ to satisfy $$-\arccos\sqrt{1 - \frac{r^2}{R^2}} + \theta_p \leq \theta \leq \arccos\sqrt{1 - \frac{r^2}{R^2}} + \theta_p$$ , set the value of polar angle $\theta$ by using the angle $\varphi$ as a step angle, and the set value of polar angle $\theta$ is substituted into the equation of the expansion circumference to solve the value of radius vector $\rho$. Since the solution is a quadratic equation in one variable, two solutions are obtained, and the smaller value from the values of radius vector $\rho$ is taken, so that the central angle of the arc sandwiched between the tangent lines is less than or equal to 180°, so as to obtain the polar coordinates ($\rho$, $\theta$) of an arc point, where $\theta$ is the set value of the polar angle $\theta$.

Then, the value of the polar angle $\theta$ may be continuously set according to the step angle $\varphi$, and the set value of the polar angle $\theta$ may be substituted into the equation of the expansion circumference to solve a value of a radius vector $\rho$, that is, the step 502 is repeated until a setting requirement is met. In one embodiment, the setting requirement is: the number of polar coordinates of arc points obtained by calculation reaches the set threshold of the total number of arc coordinate points, thereby obtaining the set of arc polar coordinate points sandwiched between the tangent lines, and the arc represented by this set is taken as the expansion boundary of the current two-dimensional points included in the contour of the obstacle.

As an implementation, as shown in FIG. 4 , the polar angle $\theta$ may be divided equally according to the angle for dividing into grids to obtain the step angle $\varphi$. Alternatively, the step angle may also be set. Since the smaller the step angle is, the more times the above step 502 is performed, the more arc polar coordinate points are obtained.

Step 503, extracting a next two-dimensional point of the contour of the obstacle, if all points of the contour of the obstacle have not been extracted, returning to step 501 until all the points of the contour of the obstacle are completed. That is, until the coordinates of the arc points sandwiched between the tangent lines on the circumference corresponding to all the two-dimensional points included in the contour of the obstacle are calculated. In one implementation, in order to reduce the amount of computation, two-dimensional points of the contour of the obstacle may be extracted equally spaced. If all points of the contour of the obstacle have been extracted, step 504 is executed.

Step 504, forming two-dimensional points of the expansion contour based on arc coordinate points. That is to screen the two-dimensional points of the expansion contour from all arc coordinate points.

In one implementation, the envelope of all arc coordinate points is taken as the expansion contour.

In another implementation, the two-dimensional points of the expansion contour are screened from all the arc coordinate points. Specifically, for the case that the range of the horizontal field of view of the depth camera is divided into grids, that is the case where, within the range formed by the boundary of the field of view, multiple rays at equal angles are set by taking the projection center of the robot body on the carrying surface as the starting point to form grids, if there is no two-dimensional point of the expansion contour in the current grid, the arc coordinate point located in the grid among the arc coordinate points calculated in step 502 is taken as the two-dimensional point of the expansion contour for the grid; if there is a two-dimensional point of an existing expansion contour in the grid, then it is determined which from the arc coordinate point located in the grid among the arc coordinate points calculated in step 502 and the two-dimensional point of the existing expansion contour in the grid is closer to the projection center of the robot body on the carrying surface, and the point closer to the projection center is taken as the two-dimensional point of the expansion contour for the grid. The connecting line of the two-dimensional points of expansion contour for all grids is taken as the expansion contour, that is to say, the envelope of the two-dimensional points of the expansion contour for all grids is taken as the expansion contour.

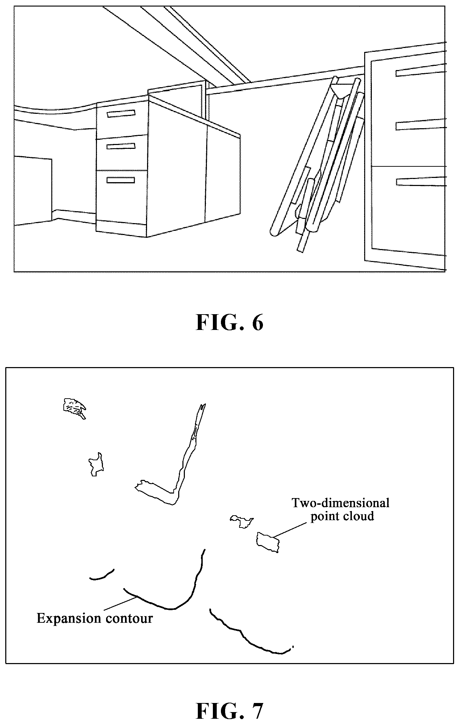

Referring to FIG. 6, FIG. 6 is a schematic diagram of a scene where a mobile robot is located. Referring to FIG. 7, FIG. 7 is a schematic diagram of a two-dimensional point cloud sensed based on depth image data of the scene shown in FIG. 6 and a contour expansion result determined based on the sensed two-dimensional point cloud.

One of the applications for a sensing-based expansion result for contour of the obstacle is that the mobile robot may perform route planning, movement control, and obstacle avoidance control. Taking the expansion result for contour of the obstacle shown in FIG. 7 as an example, the area without contour expansion for an obstacle is a passable area, which is consistent with the actual scene. That is to say, the expansion contour is taken as the boundary, the area on one side close to the mobile robot as a passable area, and the area on the other side as an impassable area.

After the depth image data is converted into a point cloud in the coordinate system of the mobile robot in the embodiment of the present application, the point cloud is screened according to set height thresholds, and ground point cloud and point cloud above the height of the mobile robot in the actual environment are eliminated, so as to use the point cloud corresponding to the obstacle(s) that may be contacted in the movement process for obstacle sensing. For three-dimensional point cloud obtained by the depth camera, the information of the height direction of the mobile robot when it moves in the plane is redundant. The screened three-dimensional point cloud is projected into a two-dimensional plane. In this way, the two-dimensional point cloud also retains the obstacle information in the three-dimensional environment, which is stored only in the form of two-dimensional points. In view of the route planning and control in the two-dimensional plane, many mature methods may be used, which provides more convenience for the robot to avoid obstacles. In the two-dimensional map, the expansion contour of the obstacle is obtained by sampling directly on the point cloud corresponding to the obstacle by using circumference, which does not need rasterization, avoids the time-consuming increase and precision loss in the rasterization process, and can provide accurate expansion contour data for obstacle avoidance control.

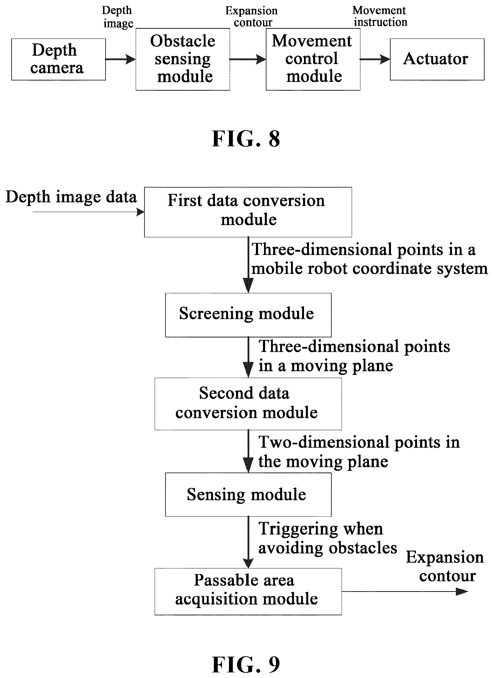

Referring to FIG. 8, FIG. 8 is a schematic diagram of an obstacle avoidance system for a mobile robot based on the depth camera according to an embodiment of the present application. The depth camera installed to the body of the mobile robot obtains the current depth image data, the obstacle sensing module obtains obstacle information through the depth data, and generates the expansion contour of the obstacle, and the movement control module performs route planning and movement control based on the expansion contour of the obstacle, and generates a movement instruction, actuator travels according to the movement instruction, thereby driving the mobile robot to avoid obstacles.

The movement instruction is also the motion instruction. The above-mentioned expansion contour is the contour of the expanded obstacle.

Referring to FIG. 9, FIG. 9 is a schematic diagram of an obstacle sensing module according to an embodiment of the present application. The obstacle sensing module includes:

a first data conversion module, configured for converting depth image data into data in the coordinate system of the mobile robot; the data in the coordinate system of the mobile robot correspond to three-dimensional points in the coordinate system of the mobile robot.

a second data conversion module, configured for converting the data in the coordinate system of the mobile robot into a projection in a moving plane of the mobile robot to obtain two-dimensional data;

a sensing module, configured for detecting the two-dimensional data within a range of travel route of the mobile robot, and obtaining obstacle information based on the detected two-dimensional data .

The obstacle sensing module further includes:
a screening module, configured for screening the data converted by the first data conversion module, and retaining the data belonging to the moving plane of the mobile robot. That is to say, the data corresponding to the obstacles that may be contacted by the mobile robot during the movement process of the mobile robot are retained.

The obstacle sensing module further includes:

an passable area acquisition module, configured for taking a projection center of a body of the mobile robot on a carrying surface as a starting point to set at least one ray at equal angles, and taking the two-dimensional point(s) on the at least ray that is closest to the starting point as a contour of the obstacle to obtain two-dimensional point(s) of the contour of the obstacle.

For any two-dimensional point of the contour of the obstacle, an expansion circumference is set by taking the two-dimensional point as the center of a circle and an extension distance as a radius; two tangent lines passing through the starting point and tangent to the expansion circumference are obtained; an arc sandwiched between the two tangent lines is taken as an expansion boundary of two-dimensional point of the contour of the obstacle, a central angle of the sandwiched arc is less than or equal to 180°, and the extension distance is at least the maximum distance between the projection center of the body of the mobile robot on the carrying surface and the contour.

The expansion boundaries of all two-dimensional points of the contour of the obstacle is taken, an envelope of the expansion boundaries of all two-dimensional points is taken as expansion contour two-dimensional points, so as to obtain a passable area and an impassable area for the mobile robot to travel.

The first data conversion module is specifically configured for acquiring, for any pixel in the depth image data, three-dimensional point coordinates of the pixel in the coordinate system of the mobile robot through a camera external parameter, a depth value of the pixel, a camera internal parameter, and a coordinate value of the pixel; and acquiring, after converting all pixels in the depth image data into three-dimensional point coordinates in the coordinate system of the mobile robot, a three-dimensional point cloud composed of three-dimensional points in the coordinate system of the mobile robot.

The second data conversion module is specifically configured for discarding, for any three-dimensional point coordinates in the coordinate system of the mobile robot, a coordinate value perpendicular to the moving plane of the mobile robot in the three-dimensional point coordinates; alternatively, setting the coordinate value perpendicular to the moving plane of the mobile robot in the three-dimensional point coordinates to 0, to obtain a two-dimensional projection of the three-dimensional point in the moving plane of the mobile robot; and

obtaining, after converting all three-dimensional point coordinates in the mobile robot coordinate system into two-dimensional projections in the moving plane of the mobile robot, a two-dimensional point cloud composed of the two-dimensional projections.

The sensing module is specifically configured for establishing a search window in an advance direction of the mobile robot, and a relative location of the search window and the mobile robot is fixed;

detecting whether there is a two-dimensional point cloud within the range of the search window, and if yes, determining that an obstacle is detected;

determining, according to the location of the nearest obstacle to the mobile robot within the range of the search window, whether the mobile robot needs to avoid obstacles, and if yes, triggering the passable area acquisition module to obtain the passable area for the mobile robot.

The passable area acquisition module is specifically configured for converting the two-dimensional point coordinates of the current contour of the obstacle into polar coordinates;

determining, according to the converted two-dimensional point polar coordinates and the extension distance, an equation of the expansion circumference in the polar coordinate system;

determining, according to the equation of the expansion circumference in the polar coordinate system, a tangent line angle range for the expansion circumference of the two-dimensional points of the current contour of the obstacle;

within the tangent line angle range, substituting a set value of a current polar angle into the equation of the expansion circumference in the polar coordinate system, and solving a value of radius vector for an arc point; extracting a smaller value from the values of radius vector to obtain polar coordinates of the arc point sandwiched by the tangent lines;

setting a next polar angle value, and returning to execute the step of substituting the set value of the current polar angle into the equation of the expansion circumference in the polar coordinate system, until the calculation of the coordinate point on an arc segment sandwiched by the tangent lines is completed; and

taking an arc formed based on all arc points as the expansion boundary of the current two-dimensional point.

An embodiment of the present application further provides a mobile robot based on a depth camera, including a memory and a processor, the memory stores thereon computer programs that, upon executed by the processor, cause the processor to execute steps of any of the above-mentioned method for sensing obstacle information for a mobile robot.

The memory may include a Rrandom Aaccess Memory (RAM), or may include a Non-Volatile Memory (NVM), for example at least one disk memory. Optionally, the memory may also be at least one storage device located away from the processor.

The processor may be a general-purpose processor, such as a Central Processing Unit (CPU), a Network Processor (NP), or the like; it may also be a Digital Signal Processor (DSP), an Application Specific Integrated Circuit (ASIC), a Field-Programmable Gate Array (FPGA) or other programmable logic device, a discrete gate or transistor logic device, a discrete hardware component.

An embodiment of the present application further provides a further mobile robot, the body of the mobile robot includes:

a depth camera installed to the body of the mobile robot, configured for acquiring depth image data;

an obstacle sensing module, configured for converting the depth image data into data in the coordinate system of the mobile robot; converting the data in the coordinate system of the mobile robot into a projection in a moving plane of the mobile robot to obtain two-dimensional data; detecting the two-dimensional data within the range of travel route of the mobile robot; obtaining obstacle information based on the detected two-dimensional data;

a movement control module, configured for forming a movement instruction according to the obstacle information;

an actuator module, configured for executing the movement instruction.

An embodiment of the present application further provides a computer readable storage medium, the computer readable storage medium stores thereon computer programs that, upon executed by a processor, cause the processor to implements the following steps:

acquiring depth image data;

converting the depth image data into data in a coordinate system of the mobile robot;

converting the data in the coordinate system of the mobile robot into a projection in a moving plane of the mobile robot to obtain two-dimensional data; and

detecting the two-dimensional data within a range of a travel route of the mobile robot based on the detected two-dimensional data to obtain obstacle information.

It the present application, the depth image data may be converted into the projection in the moving plane of the mobile robot, and a search is performed based on the two-dimensional projection data to obtain obstacle information, and data similar to the two-dimensional laser is obtained, which solves the defects that conventional obstacle avoidance sensors cannot perform full stereo sensing and obstacle avoidance, and can sense obstacles in a large range and multi-levels. On the other hand, different from the general method for processing depth data, the depth data is projected into the moving plane of the mobile robot, therefore in application, the mature technology for obstacle avoidance control in the two-dimensional environment can be applied to the solution of the present application for projection to obtain two-dimensional data, so that the solution of the present application can be widely used. Therefore, in the solution of the present application, not only the three-dimensional sensing information of the three-dimensional sensor can be used, but also a quick route planning can be performed based on the two-dimensional data.

An embodiment of the present application further provides a computer program product comprising instructions which, when running on a computer, causes the computer to execute the steps of any of the methods for sensing obstacle information for a mobile robot.

It the present application, the depth image data may be converted into the projection in the moving plane of the mobile robot, and a search is performed based on the two-dimensional projection data to obtain obstacle information, and data similar to the two-dimensional laser is obtained, which solves the defects that conventional obstacle avoidance sensors cannot perform full stereo sensing and obstacle avoidance, and can sense obstacles in a large range and multi-levels. On the other hand, different from the general method for processing depth data, the depth data is projected into the moving plane of the mobile robot, therefore in application, the mature technology for obstacle avoidance control in the two-dimensional environment can be applied to the solution of the present application for projection to obtain two-dimensional data, so that the solution of the present application can be widely used. Therefore, in the solution of the present application, not only the three-dimensional sensing information of the three-dimensional sensor can be used, but also a quick route planning can be performed based on the two-dimensional data.

For embodiments of the system, the mobile robot, the storage medium and the computer application program, since they are similar to the embodiments of the methods, the description thereof is relatively simple; the relating parts could refer to those in the description of embodiments of the methods.

**Claims**

1.  A method for sensing obstacle information for a mobile robot, wherein,
    the method comprises:

    - acquiring (101) depth image data;
    - converting (102) the depth image data into data in a coordinate system of the mobile robot;
    - converting the data in the coordinate system of the mobile robot into a projection in a moving plane of the mobile robot to obtain two-dimensional data;
    - detecting the two-dimensional data within a range of a travel route of the mobile robot; and
    - obtaining the obstacle information based on the detected two-dimensional data,
    - the method being **characterized in that** detecting two-dimensional data within the range of the travel route of the mobile robot, comprises:
    establishing a search window for detecting obstacles within the range of the travel route of the mobile robot, and searching for two-dimensional data within a range of the search window,
    - wherein the method further comprises:
    determining (106), according to a location of the nearest obstacle in the search window, whether the mobile robot needs to avoid the obstacle, and if yes, triggering to obtain a passable area for the mobile robot to travel,
    - wherein, obtaining the passable area for the mobile robot to travel, comprises:

        - taking a projection center of a body of the mobile robot on the carrying surface as a starting point to set at least one ray at equal angles, and taking a two-dimensional point on the ray that is closest to the starting point as a contour of the obstacle to obtain a two-dimensional point of the contour of the obstacle;
        - setting, for any two-dimensional point of the contour of the obstacle, an expansion circumference by taking the two-dimensional point as the center of a circle and an extension distance as a radius; obtaining two tangent lines passing through the starting point and tangent to the expansion circumference; taking an arc sandwiched between the two tangent lines as an expansion boundary of the two-dimensional point of the contour of the obstacle, wherein a central angle of the sandwiched arc is less than or equal to 180°, and the extension distance is at least the maximum distance between the projection center of the body of mobile robot on the carrying surface and the contour;
        - obtaining the expansion boundaries of all two-dimensional points of the contour of the obstacle, taking an envelope of the expansion boundaries of all the two-dimensional points as an expansion contour, taking the expansion contour as a boundary to set an area on one side close to the mobile robot as the passable area, and an area on the other side as an impassable area.

2.  The method of claim 1,
    wherein converting the depth image data into data in the coordinate system of the mobile robot, comprises:

    - for any pixel in the depth image data, acquiring three-dimensional point coordinates of the pixel in the coordinate system of the mobile robot through a camera external parameter, a depth value of the pixel, a camera internal parameter, and a coordinate value of the pixel,
    - acquiring, after converting all pixels in the depth image data into three-dimensional point coordinates in the coordinate system of the mobile robot, a three-dimensional point cloud composed of three-dimensional points in the coordinate system of the mobile robot.

3.  The method of claim 2,
    wherein, obtaining three-dimensional point coordinates of the pixel in the coordinate system of the mobile robot through the camera external parameter, the depth value of the pixel, the camera internal parameter, and the coordinate value of the pixel, comprises:

- obtaining, according to an external parameter of a depth camera, a transformation relationship matrix from the coordinate system of the mobile robot to a coordinate system of the depth camera;
- calculating a product of the transformation relationship matrix, the depth value of the pixel, an inverse matrix of a camera internal parameter matrix and a matrix formed by pixel coordinate values, to obtain three-dimensional point coordinates of the pixel in the coordinate system of the mobile robot;

- wherein, the matrix formed by the pixel coordinate values is $\begin{bmatrix} u \\ v \\ 1 \end{bmatrix}$, u and v are the coordinates of the pixel in an image coordinate system, respectively.

**4.** The method of claim 2,
wherein, converting the data in the coordinate system of the mobile robot into the projection in the moving plane of the mobile robot to obtain the two-dimensional data, comprises:

- discarding, for any three-dimensional point coordinate in the coordinate system of the mobile robot, a coordinate value perpendicular to the moving plane of the mobile robot in the three-dimensional point coordinate, to obtain a two-dimensional projection of the three-dimensional point in the moving plane of the mobile robot; alternatively, setting the coordinate value perpendicular to the moving plane of the mobile robot in the three-dimensional point coordinate to 0, to obtain the two-dimensional projection of the three-dimensional point in the moving plane of the mobile robot;
- obtaining, after converting all three-dimensional point coordinates in the coordinate system of the mobile robot into two-dimensional projections in the moving plane of the mobile robot, a two-dimensional point cloud composed of the two-dimensional projections.

**5.** The method of claim 1,
wherein, establishing the search window for detecting obstacles within the range of the travel route of the mobile robot, and searching for the two-dimensional data within the range of the search window, comprises:

establishing (105) the search window in an advance direction of the mobile robot, wherein a relative location of the search window and the mobile robot is fixed,
obtaining the obstacle information based on the detected two-dimensional data, comprises:
detecting whether there is a two-dimensional point cloud within the range of the search window, and if yes, determining that an obstacle is detected.

**6.** The method of any one of claims 1 to 3, wherein, converting the data in the coordinate system of the mobile robot into the projection in the moving plane of the mobile robot to obtain the two-dimensional data, comprises:

- screening converted data in the coordinate system of the mobile robot, and retaining data corresponding to an obstacle that may be contacted during a movement process;
- converting the retained data corresponding to the obstacle that may be contacted during the movement process into the projection in the moving plane of the mobile robot to obtain the two-dimensional data.

**7.** The method of claim 6,
wherein, a carrying surface for the mobile robot is ground, and retaining the data corresponding to the obstacle that may be contacted during the movement process, comprises: retaining a three-dimensional point(s) with a z-value(s) in the three-dimensional point coordinates in the coordinate system of the mobile robot greater than a first threshold and less than a second threshold.

**8.** The method of claim 1,

- wherein, setting, for any two-dimensional point of the contour of the obstacle, the expansion circumference by taking the two-dimensional point as the center of the circle and the extension distance as the radius, comprises:

converting two-dimensional point coordinates of a current contour of the obstacle into polar coordinates;
determining, according to the converted polar coordinates and the extension distance, an equation of the expansion circumference in a polar coordinate system;

- wherein obtaining the two tangent lines passing through the starting point and tangent to the expansion circumference, comprises:

determining (501), according to the equation of the expansion circumference in the polar coordinate system, a tangent line angle range for the expansion circumference of the two-dimensional point of the current contour of the obstacle;

- wherein taking the arc sandwiched between the two tangent lines as the expansion boundary of the two-dimensional point of the contour of the obstacle, comprises:

- within the tangent line angle range, substituting a set current polar angle value into the equation of the expansion circumference in the polar coordinate system, and solving radius vector values for an arc point; extracting a smaller value from the radius vector values to obtain polar coordinates of the arc point sandwiched by the tangent lines,

- setting a next polar angle value, and returning to execute the step of substituting the set current polar angle value into the equation of the expansion circumference in the polar coordinate system, until the calculation of the arc coordinate point on an arc segment sandwiched by the tangent lines is completed;

- forming the expansion boundary of the current two-dimensional point based on the arc point.

9. The method of claim 8,

- wherein, taking the projection center of the body of the mobile robot on the carrying surface as the starting point to set at least one ray at equal angles, further comprises: starting from a boundary of an image field of view and taking the projection center of the body of the mobile robot on the carrying surface as the starting point to take rays at equal angles to form grids,

- wherein forming the expansion boundary of the current two-dimensional point based on the arc point, comprises:

- taking, if there is no two-dimensional point of the expansion contour in a current grid, an arc coordinate point located in the grid among the calculated arc coordinate points as the two-dimensional point of the expansion contour for the grid;

- determining, if there is a two-dimensional point of an existing expansion contour in the current grid, which from the arc coordinate point located in the grid among the arc coordinate points calculated and the two-dimensional point of the existing expansion contour is closer to the projection center of the body of the mobile robot on the carrying surface, and taking the point closer to the projection center as the two-dimensional point of the expansion contour for the grid;

- taking the two-dimensional points of the expansion contours for all grids as the expansion boundary of the current two-dimensional point.

10. A device for sensing obstacle information for a mobile robot, wherein the device comprises:

- a first data conversion module, configured for converting depth image data into data in a coordinate system of the mobile robot;

- a second data conversion module, configured for converting the data in the coordinate system of the mobile robot into a projection in a moving plane of the mobile robot to obtain two-dimensional data;

- a sensing module, configured for detecting the two-dimensional data within a range of a travel route of the mobile robot and obtaining the obstacle information based on the detected two-dimensional data; **characterized in that** the device further comprises

- a passable area acquisition module, configured for taking a projection center of a body of the mobile robot on a carrying surface as a starting point to set at least one ray at equal angles, and taking a two-dimensional point on the at least ray that is closest to the starting point as a contour of the obstacle to obtain two-dimensional point(s) of the contour of the obstacle,

setting, for any two-dimensional point of the contour of the obstacle, an expansion circumference by taking the two-dimensional point as the center of a circle and an extension distance as a radius; obtaining two tangent lines passing through the starting point and tangent to the expansion circumference; taking an arc sandwiched between the two tangent lines as an expansion boundary of two-dimensional point of the contour of the obstacle, wherein a central angle of the sandwiched arc is less than or equal to 180°, and the extension distance is at least the maximum distance between the projection center of the body of the mobile robot on the carrying surface and the contour;

taking the expansion boundaries of all two-dimensional points of the contour of the obstacle, taking an envelope of the expansion boundaries of all two-dimensional points as expansion contour two-dimensional points, so as to obtain a passable area and an impassable area for the mobile robot to travel.

**11.** A mobile robot, wherein a body of the mobile robot comprises:

- a depth camera installed to the body of the mobile robot, configured for acquiring depth image data;
- an obstacle sensing module, configured for converting the depth image data into data in a coordinate system of the mobile robot; converting the data in the coordinate system of the mobile robot into a projection in a moving plane of the mobile robot to obtain two-dimensional data; detecting the two-dimensional data in a range of a travel route of the mobile robot; obtaining obstacle information based on the detected two-dimensional data;
- a movement control module, configured for forming a movement instruction according to the obstacle information;
- an actuator module, configured for executing the movement instruction,
- **characterized in that** the obstacle sensing module further comprises:

an passable area acquisition module, configured for taking a projection center of a body of the mobile robot on a carrying surface as a starting point to set at least one ray at equal angles, and taking a two-dimensional point on the at least ray that is closest to the starting point as a contour of the obstacle to obtain two-dimensional point(s) of the contour of the obstacle,

setting, for any two-dimensional point of the contour of the obstacle, an expansion circumference by taking the two-dimensional point as the center of a circle and an extension distance as a radius; obtaining two tangent lines passing through the starting point and tangent to the expansion circumference; taking an arc sandwiched between the two tangent lines as an expansion boundary of two-dimensional point of the contour of the obstacle, wherein a central angle of the sandwiched arc is less than or equal to 180°, and the extension distance is at least the maximum distance between the projection center of the body of the mobile robot on the carrying surface and the contour;

taking the expansion boundaries of all two-dimensional points of the contour of the obstacle, taking an envelope of the expansion boundaries of all two-dimensional points as expansion contour two-dimensional points, so as to obtain a passable area and an impassable area for the mobile robot to travel.

**12.** A computer readable storage medium, wherein the computer readable storage medium stores thereon computer programs that, upon executed by a processor, cause the processor to implement steps of any one of the methods for sensing obstacle information for a mobile robot of claims 1 to 9.

**13.** A computer program product comprising instructions, wherein the instructions, when running on a computer, causes the computer to implement steps of any one of the methods for sensing obstacle information for a mobile robot of claims 1 to 9.

**Patentansprüche**

**1.** Verfahren zum Erfassen von Hindernisinformationen für einen mobilen Roboter, wobei das Verfahren umfasst:

- Erlangen (101) von Tiefenbilddaten;
- Umwandeln (102) der Tiefenbilddaten in Daten in einem Koordinatensystem des mobilen Roboters;
- Umwandeln der Daten in dem Koordinatensystem des mobilen Roboters in eine Projektion in einer Bewegungsebene des mobilen Roboters, um zweidimensionale Daten zu erhalten;
- Erkennen der zweidimensionalen Daten innerhalb eines Bereichs eines Fahrwegs des mobilen Roboters; und
- Erhalten der Hindernisinformationen auf Basis der erkannten zweidimensionalen Daten,
- wobei das Verfahren **dadurch gekennzeichnet ist, dass** Erkennen zweidimensionaler Daten innerhalb des Bereichs des Fahrwegs des mobilen Roboters umfasst:

Einrichten eines Suchfensters zum Erkennen von Hindernissen innerhalb des Bereichs des Fahrwegs des mobilen Roboters, und Suchen nach zweidimensionalen Daten innerhalb eines Bereichs des Suchfensters,
- wobei das Verfahren weiter umfasst:

Bestimmen (106), gemäß einer Position des nächstgelegenen Hindernisses in dem Suchfenster, ob der mobile Roboter dem Hindernis ausweichen muss, und falls ja, Auslösen, um einen passierbaren Bereich zu erhalten, in welchem der mobile Roboter fahren kann,

- wobei Erhalten des passierbaren Bereichs, in dem der mobile Roboter fahren kann, umfasst:

- Annehmen eines Projektionszentrums eines Körpers des mobilen Roboters auf der tragenden Fläche als einen Ausgangspunkt, um zumindest einen Strahl in gleichen Winkeln festzulegen, und Annehmen eines zweidimensionalen Punkts auf dem Strahl, welcher dem Ausgangspunkt am nächsten liegt, als eine Kontur des Hindernisses, um einen zweidimensionalen Punkt der Kontur des Hindernisses zu erhalten;
- Festlegen eines Ausdehnungsumfangs für jeden zweidimensionalen Punkt der Kontur des Hindernisses durch Annehmen des zweidimensionalen Punkts als den Mittelpunkt eines Kreises und eines Ausdehnungsabstands als einen Radius; Erhalten zweier Tangentenlinien, welche durch den Ausgangspunkt verlaufen und den Ausdehnungsumfang tangieren; Annehmen eines zwischen den zwei Tangentenlinien eingeschlossenen Bogens als eine Ausdehnungsgrenze des zweidimensionalen Punkts der Kontur des Hindernisses, wobei ein Mittelwinkel des eingeschlossenen Bogens kleiner oder gleich 180° ist und der Ausdehnungsabstand zumindest der maximale Abstand zwischen dem Projektionszentrum des Körpers des mobilen Roboters auf der tragenden Fläche und der Kontur ist;
- Erhalten der Ausdehnungsgrenzen aller zweidimensionalen Punkte der Kontur des Hindernisses, Annehmen einer Hülle der Ausdehnungsgrenzen aller zweidimensionalen Punkte als eine Ausdehnungskontur, Annehmen der Ausdehnungskontur als eine Grenze, um einen Bereich auf einer Seite in der Nähe des mobilen Roboters als den passierbaren Bereich und auf der anderen Seite als einen unpassierbaren Bereich festzulegen.

2. Verfahren nach Anspruch 1,
wobei Umwandeln der Tiefenbilddaten in Daten in dem Koordinatensystem des mobilen Roboters umfasst:

- für jedes Pixel in den Tiefenbilddaten, Erlangen dreidimensionaler Punktkoordinaten des Pixels in dem Koordinatensystem des mobilen Roboters durch einen kameraexternen Parameter, einen Tiefenwert des Pixels, einen kamerainternen Parameter und einen Koordinatenwert des Pixels,
- Erlangen einer dreidimensionalen Punktwolke, bestehend aus dreidimensionalen Punkten in dem Koordinatensystem des mobilen Roboters, nach Umwandeln aller Pixel in den Tiefenbilddaten in dreidimensionale Punktkoordinaten in dem Koordinatensystem des mobilen Roboters.

3. Verfahren nach Anspruch 2,
wobei Erhalten dreidimensionaler Punktkoordinaten des Pixels in dem Koordinatensystem des mobilen Roboters durch den kameraexternen Parameter, den Tiefenwert des Pixels, den kamerainternen Parameter und den Koordinatenwert des Pixels umfasst:

- Erhalten, gemäß einem externen Parameter einer Tiefenkamera, einer Transformationsbeziehungsmatrix von dem Koordinatensystem des mobilen Roboters zu einem Koordinatensystem der Tiefenkamera;
- Berechnen eines Produkts aus der Transformationsbeziehungsmatrix, dem Tiefenwert des Pixels, einer inversen Matrix einer kamerainternen Parametermatrix und einer durch Pixelkoordinatenwerte gebildeten Matrix, um dreidimensionale Punktkoordinaten des Pixels in dem Koordinatensystem des mobilen Roboters zu erhalten;

- wobei die durch die Pixelkoordinatenwerte gebildete Matrix $\begin{bmatrix} u \\ v \\ 1 \end{bmatrix}$ ist, wobei u und v jeweils die Koordinaten des Pixels in einem Bildkoordinatensystem sind.

4. Verfahren nach Anspruch 2,
wobei Umwandeln der Daten in dem Koordinatensystem des mobilen Roboters in die Projektion in der Bewegungsebene des mobilen Roboters, um die zweidimensionalen Daten zu erhalten, umfasst:

- Verwerfen eines Koordinatenwerts senkrecht zu der Bewegungsebene des mobilen Roboters in der dreidimensionalen Punktkoordinate für jede dreidimensionale Punktkoordinate in dem Koordinatensystem des mobilen Roboters, um eine zweidimensionale Projektion des dreidimensionalen Punkts in der Bewegungsebene des mobilen Roboters zu erhalten; alternativ, Festlegen des Koordinatenwerts senkrecht zu der Bewegungsebene des mobilen Roboters in der dreidimensionalen Punktkoordinate auf 0, um die zweidimensionale Projektion des dreidimensionalen Punkts in der Bewegungsebene des mobilen Roboters zu erhalten;
- Erhalten einer zweidimensionalen Punktwolke, welche aus den zweidimensionalen Projektionen besteht, nach Umwandeln aller dreidimensionalen Punktkoordinaten in dem Koordinatensystem des mobilen Roboters in zweidimensionale Projektionen in der Bewegungsebene des mobilen Roboters.

5. Verfahren nach Anspruch 1,
wobei Einrichten des Suchfensters zum Erkennen von Hindernissen innerhalb des Bereichs des Fahrwegs des mobilen Roboters und Suchen der zweidimensionalen Daten innerhalb des Bereichs des Suchfensters umfasst:

Einrichten (105) des Suchfensters in einer Vorwärtsrichtung des mobilen Roboters, wobei eine relative Position des Suchfensters und des mobilen Roboters feststehend ist,
Erhalten der Hindernisinformationen auf Basis der erkannten zweidimensionalen Daten umfasst:
Erkennen, ob sich innerhalb des Bereichs des Suchfensters eine zweidimensionale Punktwolke befindet, und falls ja, Bestimmen, dass ein Hindernis erkannt wurde.

6. Verfahren nach einem der Ansprüche 1 bis 3, wobei Umwandeln der Daten in dem Koordinatensystem des mobilen Roboters in die Projektion in der Bewegungsebene des mobilen Roboters, um die zweidimensionalen Daten zu erhalten, umfasst:

- Screening umgewandelter Daten in dem Koordinatensystem des mobilen Roboters und Behalten von Daten, welche einem Hindernis entsprechen, welches während eines Bewegungsprozesses berührt werden könnte;
- Umwandeln der behaltenen Daten, welche dem Hindernis entsprechen, welches während des Bewegungsprozesses berührt werden könnte, in die Projektion in der Bewegungsebene des mobilen Roboters, um die zweidimensionalen Daten zu erhalten.

7. Verfahren nach Anspruch 6,
wobei eine tragende Fläche für den mobilen Roboter Boden ist, und Behalten der Daten, welche dem Hindernis entsprechen, welches während des Bewegungsprozesses berührt werden könnte, umfasst: Behalten eines dreidimensionalen Punkts/dreidimensionaler Punkte mit einem z-Wert(en) in den dreidimensionale Punktkoordinaten in dem Koordinatensystem des mobilen Roboters größer als ein erster Schwellenwert und kleiner als ein zweiter Schwellenwert.

8. Verfahren nach Anspruch 1,

- wobei Festlegen des Ausdehnungsumfangs für jeden zweidimensionalen Punkt der Kontur des Hindernisses durch Annehmen des zweidimensionalen Punkts als den Mittelpunkt des Kreises und des Ausdehnungsabstands als den Radius umfasst:

Umwandeln zweidimensionaler Punktkoordinaten einer aktuellen Kontur des Hindernisses in Polarkoordinaten;
Bestimmen einer Gleichung des Ausdehnungsumfangs in einem Polarkoordinatensystem gemäß den umgewandelten Polarkoordinaten und dem Ausdehnungsabstand;

- wobei Erhalten der zwei Tangentenlinien, welche durch den Ausgangspunkt verlaufen und den Ausdehnungsumfang tangieren, umfasst:
Bestimmen (501), gemäß der Gleichung des Ausdehnungsumfangs in dem Polarkoordinatensystem, eines Winkelbereichs der Tangentenlinie für den Ausdehnungsumfang des zweidimensionalen Punkts der aktuellen Kontur des Hindernisses;
- wobei Annehmen des zwischen den zwei Tangentenlinien eingeschlossenen Bogens als die Ausdehnungsgrenze des zweidimensionalen Punkts der Kontur des Hindernisses umfasst:

- innerhalb des Winkelbereichs der Tangentenlinie, Ersetzen eines festgelegten aktuellen Polarwinkelwerts in der Gleichung des Ausdehnungsumfangs in dem Polarkoordinatensystem und Auflösen von Radiusvektorwerten für einen Bogenpunkt; Extrahieren eines kleineren Werts aus den Radiusvektorwerten, um Polarkoordinaten des zwischen den Tangentenlinien eingeschlossenen Bogenpunkts zu erhalten,
- Festlegen eines nächsten Polarwinkelwerts und Zurückkehren zum Ausführen des Schritts des Ersetzen des festgelegten aktuellen Polarwinkelwerts in der Gleichung des Ausdehnungsumfangs in dem Polarkoordinatensystem, bis die Berechnung des Bogenkoordinatenpunkts für ein zwischen den Tangentenlinien eingeschlossenen Bogensegments abgeschlossen ist;
- Bilden der Ausdehnungsgrenze des aktuellen zweidimensionalen Punkts auf Basis des Bogenpunkts.

9. Verfahren nach Anspruch 8,

- wobei Annehmen des Projektionszentrums des Körpers des mobilen Roboters auf der tragenden Fläche als den Ausgangspunkt, um zumindest einen Strahl in gleichen Winkeln festzulegen, weiter umfasst: Ausgehen von einer Grenze eines Bildfelds und Annehmen des Projektionszentrums des Körpers des mobilen Roboters auf der tragenden Fläche als den Ausgangspunkt, um Strahlen in gleichen Winkeln anzunehmen, um Raster zu bilden,
- wobei Bilden der Ausdehnungsgrenze des aktuellen zweidimensionalen Punkts auf Basis des Bogenpunkts umfasst:

  - falls es keinen zweidimensionalen Punkt der Ausdehnungskontur in einem aktuellen Raster gibt, Annehmen eines Bogenkoordinatenpunkts, welcher sich in dem Raster unter den berechneten Bogenkoordinatenpunkten befindet, als den zweidimensionalen Punkt der Ausdehnungskontur für das Raster;
  - Bestimmen, ob es einen zweidimensionalen Punkt einer vorhandenen Ausdehnungskontur in dem aktuellen Raster gibt, welcher von dem Bogenkoordinatenpunkt, welcher sich unter den berechneten Bogenkoordinatenpunkten in dem Raster befindet, und dem zweidimensionalen Punkt der vorhandenen Ausdehnungskontur näher dem Projektionszentrum des Körpers des mobilen Roboters auf der tragenden Fläche ist, und Annehmen des dem Projektionszentrum näheren Punkts als den zweidimensionalen Punkt der Ausdehnungskontur für das Raster;
  - Annehmen der zweidimensionalen Punkte der Ausdehnungskonturen für alle Raster als die Ausdehnungsgrenze des aktuellen zweidimensionalen Punkts.

10. Vorrichtung zum Erfassen von Hindernisinformationen für einen mobilen Roboter, wobei die Vorrichtung umfasst:

- ein erstes Datenumwandlungsmodul, welches dazu konfiguriert ist, Tiefenbilddaten in Daten in einem Koordinatensystem des mobilen Roboters umzuwandeln;
- ein zweites Datenumwandlungsmodul, welches dazu konfiguriert ist, die Daten in dem Koordinatensystem des mobilen Roboters in eine Projektion in einer Bewegungsebene des mobilen Roboters umzuwandeln, um zweidimensionale Daten zu erhalten;
- ein Erfassungsmodul, welches dazu konfiguriert ist, die zweidimensionalen Daten innerhalb eines Bereichs eines Fahrwegs des mobilen Roboters zu erkennen und die Hindernisinformationen auf Basis der erkannten zweidimensionalen Daten zu erhalten; **dadurch gekennzeichnet, dass** die Vorrichtung weiter umfasst:

  - ein Modul zur Erlangung von passierbaren Bereichen, welches dazu konfiguriert ist, ein Projektionszentrum eines Körpers des mobilen Roboters auf einer tragenden Fläche als einen Ausgangspunkt anzunehmen, um zumindest einen Strahl in gleichen Winkeln festzulegen, und einen zweidimensionalen Punkt auf dem zumindest einen Strahl, welcher dem Ausgangspunkt am nächsten liegt, als eine Kontur des Hindernisses anzunehmen, um (einen) zweidimensionale(n) Punkt(e) der Kontur des Hindernisses zu erhalten, einen Ausdehnungsumfang für jeden zweidimensionalen Punkt der Kontur des Hindernisses durch Annehmen des zweidimensionalen Punkts als den Mittelpunkt eines Kreises und eines Ausdehnungsabstands als einen Radius festzulegen; Erhalten zweier Tangentenlinien, welche durch den Ausgangspunkt verlaufen und den Ausdehnungsumfang tangieren; einen zwischen den zwei Tangentenlinien eingeschlossenen Bogen als eine Ausdehnungsgrenze des zweidimensionalen Punkts der Kontur des Hindernisses anzunehmen, wobei ein Mittelwinkel des eingeschlossenen Bogens kleiner oder gleich 180° ist und der Ausdehnungsabstand zumindest der maximale Abstand zwischen dem Projektionszentrum des Körpers des mobilen Roboters auf der tragenden Fläche und der Kontur ist; die Ausdehnungsgrenzen aller zweidimensionalen Punkte der Kontur des Hindernisses anzunehmen, eine Hülle der Ausdehnungsgrenzen aller zweidimensionalen Punkte als zweidimensionale Ausdehnungskonturpunkte anzunehmen, um so einen passierbaren Bereich und einen unpassierbaren Bereich zu erhalten, in welchem der mobile Roboter fahren kann.

11. Mobiler Roboter,
wobei
ein Körper des mobilen Roboters umfasst:

- eine an dem Körper des mobilen Roboters installierte Tiefenkamera, welche für das Erlangen von Tiefenbilddaten konfiguriert ist;

- ein Hinderniserfassungsmodul, welches dazu konfiguriert ist, die Tiefenbilddaten in Daten in einem Koordinatensystem des mobilen Roboters umzuwandeln; die Daten in dem Koordinatensystem des mobilen Roboters in eine Projektion in einer Bewegungsebene des mobilen Roboters umzuwandeln, um zweidimensionale Daten zu erhalten; die zweidimensionalen Daten in einem Bereich eines Fahrwegs des mobilen Roboters zu erkennen; Hindernisinformationen auf Basis der erkannten zweidimensionalen Daten zu erhalten;
- ein Bewegungssteuerungsmodul, welches dazu konfiguriert ist, eine Bewegungsanweisung gemäß den Hindernisinformationen zu bilden;
- ein Aktormodul, welches dazu konfiguriert ist, die Bewegungsanweisung auszuführen,
- **dadurch gekennzeichnet, dass** das Hinderniserfassungsmodul weiter umfasst:

ein Modul zur Erlangung von passierbaren Bereichen, welches dazu konfiguriert ist, ein Projektionszentrum eines Körpers des mobilen Roboters auf einer tragenden Fläche als einen Ausgangspunkt anzunehmen, um zumindest einen Strahl in gleichen Winkeln festzulegen, und einen zweidimensionalen Punkt auf dem zumindest einen Strahl, welcher dem Ausgangspunkt am nächsten liegt, als eine Kontur des Hindernisses anzunehmen, um (einen) zweidimensionale(n) Punkt(e) der Kontur des Hindernisses zu erhalten, einen Ausdehnungsumfang für jeden zweidimensionalen Punkt der Kontur des Hindernisses durch Annehmen des zweidimensionalen Punkts als den Mittelpunkt eines Kreises und eines Ausdehnungsabstands als einen Radius festzulegen; Erhalten zweier Tangentenlinien, welche durch den Ausgangspunkt verlaufen und den Ausdehnungsumfang tangieren; einen zwischen den zwei Tangentenlinien eingeschlossenen Bogen als eine Ausdehnungsgrenze des zweidimensionalen Punkts der Kontur des Hindernisses anzunehmen, wobei ein Mittelwinkel des eingeschlossenen Bogens kleiner oder gleich 180° ist und der Ausdehnungsabstand zumindest der maximale Abstand zwischen dem Projektionszentrum des Körpers des mobilen Roboters auf der tragenden Fläche und der Kontur ist; die Ausdehnungsgrenzen aller zweidimensionalen Punkte der Kontur des Hindernisses anzunehmen, eine Hülle der Ausdehnungsgrenzen aller zweidimensionalen Punkte als zweidimensionale Ausdehnungskonturpunkte anzunehmen, um so einen passierbaren Bereich und einen unpassierbaren Bereich zu erhalten, in welchem der mobile Roboter fahren kann.

**12.** Computerlesbares Speichermedium,
wobei
das computerlesbare Speichermedium darauf Computerprogramme speichert, welche bei Ausführung durch einen Prozessor den Prozessor veranlassen, Schritte nach einem der Verfahren zum Erfassen von Hindernisinformationen für einen mobilen Roboter nach den Ansprüchen 1 bis 9 zu implementieren.

**13.** Computerprogrammprodukt, welches Anweisungen umfasst,
wobei
die Anweisungen, wenn auf einem Computer ausgeführt, den Computer veranlassen, Schritte nach einem der Verfahren zum Erfassen von Hindernisinformationen für einen mobilen Roboter nach den Ansprüchen 1 bis 9 zu implementieren.

**Revendications**

**1.** Procédé de détection d'informations d'obstacle pour un robot mobile, dans lequel le procédé comprend :

- l'acquisition (101) de données d'image de profondeur ;
- la conversion (102) des données d'image de profondeur en données dans un système de coordonnées du robot mobile ;
- la conversion des données dans le système de coordonnées du robot mobile en une projection dans un plan de déplacement du robot mobile pour obtenir des données bidimensionnelles ;
- la détection des données bidimensionnelles dans un choix d'un itinéraire de déplacement du robot mobile ; et
- l'obtention des informations d'obstacle sur la base des données bidimensionnelles détectées,
- le procédé étant **caractérisé en ce que** la détection de données bidimensionnelles dans le choix de l'itinéraire de déplacement du robot mobile, comprend :
l'établissement d'une fenêtre de recherche pour détecter des obstacles dans la portée de l'itinéraire de déplacement du robot mobile et la recherche de données bidimensionnelles dans un choix de la fenêtre de recherche,
- dans lequel le procédé comprend en outre :
la détermination (106), en fonction d'un emplacement de l'obstacle le plus proche dans la fenêtre de recherche, si le robot mobile doit éviter l'obstacle, et si tel est le cas, le déclenchement pour obtenir une zone franchissable pour le déplacement du robot mobile,

- dans lequel, l'obtention de la zone franchissable pour le déplacement du robot mobile, comprend :

  - la prise d'un centre de projection d'un corps du robot mobile sur la surface porteuse comme point de départ pour placer au moins un rayon à des angles égaux et la prise d'un point bidimensionnel sur le rayon qui est le plus proche du point de départ comme contour de l'obstacle pour obtenir un point bidimensionnel du contour de l'obstacle ;
  - la définition, pour n'importe quel point bidimensionnel du contour de l'obstacle, d'une circonférence d'expansion en prenant le point bidimensionnel comme centre d'un cercle et une distance d'extension comme rayon ; l'obtention de deux lignes tangentes passant par le point de départ et tangentes à la circonférence d'expansion ; la prise d'un arc pris en sandwich entre les deux lignes tangentes comme limite d'expansion du point bidimensionnel du contour de l'obstacle, dans lequel un angle central de l'arc pris en sandwich est inférieur ou égal à 180° et la distance d'extension est au moins la distance maximale entre le centre de projection du corps du robot mobile sur la surface porteuse et le contour ;
  - l'obtention des limites d'expansion de tous les points bidimensionnels du contour de l'obstacle, la prise d'une enveloppe des limites d'expansion de tous les points bidimensionnels comme contour d'expansion, la prise du contour d'expansion comme limite pour définir une zone d'un côté proche du robot mobile comme zone franchissable, et une zone de l'autre côté comme zone infranchissable.

2. Procédé selon la revendication 1,
dans lequel la conversion des données d'image de profondeur en données dans le système de coordonnées du robot mobile comprend :

   - pour n'importe quel pixel dans les données d'image de profondeur, l'acquisition de coordonnées de points tridimensionnels du pixel dans le système de coordonnées du robot mobile au moyen d'un paramètre externe de caméra, d'une valeur de profondeur du pixel, d'un paramètre interne de caméra et d'une valeur de coordonnées du pixel,
   - l'acquisition, après conversion de tous les pixels dans les données d'image de profondeur en coordonnées de points tridimensionnels dans le système de coordonnées du robot mobile, d'un nuage de points tridimensionnels composé de points tridimensionnels dans le système de coordonnées du robot mobile.

3. Procédé selon la revendication 2,
dans lequel, l'obtention de coordonnées de points tridimensionnels du pixel dans le système de coordonnées du robot mobile au moyen du paramètre externe de caméra, de la valeur de profondeur du pixel, du paramètre interne de caméra et de la valeur de coordonnées du pixel, comprend :

   - l'obtention, en fonction d'un paramètre externe d'une caméra de profondeur, d'une matrice de relation de transformation depuis le système de coordonnées du robot mobile jusqu'à un système de coordonnées de la caméra de profondeur ;
   - le calcul d'un produit de la matrice de relation de transformation, de la valeur de profondeur du pixel, d'une matrice inverse d'une matrice de paramètres internes de caméra et d'une matrice formée par des valeurs de coordonnées de pixel, pour obtenir des coordonnées de points tridimensionnels du pixel dans le système de coordonnées du robot mobile ;

   - dans lequel la matrice formée par les valeurs de coordonnées de pixel est $\begin{bmatrix} u \\ v \\ 1 \end{bmatrix}$ , u et v sont respectivement les coordonnées du pixel dans un système de coordonnées d'image.

4. Procédé selon la revendication 2,
dans lequel la conversion des données dans le système de coordonnées du robot mobile en projection dans le plan de déplacement du robot mobile pour obtenir les données bidimensionnelles comprend :

   - le rejet, pour n'importe quelle coordonnée de point tridimensionnel dans le système de coordonnées du robot mobile, d'une valeur de coordonnée perpendiculaire au plan de déplacement du robot mobile dans la coordonnée de point tridimensionnel, pour obtenir une projection bidimensionnelle du point tridimensionnel dans le plan de déplacement du robot mobile ; en variante, la définition de la valeur de coordonnée perpendiculaire au plan de déplacement du robot mobile dans la coordonnée de point tridimensionnel à 0, pour obtenir la projection bidimensionnelle du point tridimensionnel dans le plan de déplacement du robot mobile ;
- l'obtention, après conversion de toutes les coordonnées de points tridimensionnels dans le système de coordonnées du robot mobile en projections bidimensionnelles dans le plan de déplacement du robot mobile, d'un nuage de points bidimensionnels composé des projections bidimensionnelles.

5. Procédé selon la revendication 1,
dans lequel, l'établissement de la fenêtre de recherche pour détecter des obstacles dans le choix de l'itinéraire de déplacement du robot mobile, et la recherche des données bidimensionnelles dans le choix de la fenêtre de recherche, comprend :

l'établissement (105) de la fenêtre de recherche dans une direction d'avance du robot mobile, dans lequel un emplacement relatif de la fenêtre de recherche et du robot mobile est fixé,
l'obtention des informations d'obstacle sur la base des données bidimensionnelles détectées comprend :
la détection s'il existe un nuage de points bidimensionnels dans le choix de la fenêtre de recherche et si, tel est le cas, la détermination qu'un obstacle est détecté.

6. Procédé selon l'une quelconque des revendications 1 à 3, dans lequel la conversion des données dans le système de coordonnées du robot mobile en projection dans le plan de déplacement du robot mobile pour obtenir les données bidimensionnelles comprend :

- le filtrage des données converties dans le système de coordonnées du robot mobile et la conservation de données correspondant à un obstacle qui peut être touché pendant un processus de déplacement ;
- la conversion des données conservées correspondant à l'obstacle qui peut être touché pendant le processus de déplacement en projection dans le plan de déplacement du robot mobile pour obtenir les données bidimensionnelles.

7. Procédé selon la revendication 6,
dans lequel une surface porteuse pour le robot mobile est le sol et la conservation des données correspondant à l'obstacle qui peut être touché pendant le processus de déplacement comprend : la conservation d'un ou de plusieurs points tridimensionnels avec une ou plusieurs valeurs z dans le système de coordonnées de points tridimensionnels dans le système de coordonnées du robot mobile supérieures à un premier seuil et inférieures à un second seuil.

8. Procédé selon la revendication 1,

- dans lequel, la définition, pour n'importe quel point bidimensionnel du contour de l'obstacle, de la circonférence d'expansion en prenant le point bidimensionnel comme centre du cercle et la distance d'extension comme rayon, comprend :

la conversion de coordonnées de points bidimensionnels d'un contour actuel de l'obstacle en coordonnées polaires ;
la détermination, en fonction des coordonnées polaires converties et de la distance d'extension, d'une équation de la circonférence d'expansion dans un système de coordonnées polaires ;

- dans lequel l'obtention des deux lignes tangentes passant par le point de départ et tangentes à la circonférence d'expansion, comprend :
la détermination (501), selon l'équation de la circonférence d'expansion dans le système de coordonnées polaires, d'un choix d'angles de lignes tangentes pour la circonférence d'expansion du point bidimensionnel du contour actuel de l'obstacle ;
- dans lequel la prise de l'arc pris en sandwich entre les deux lignes tangentes comme limite d'expansion du point bidimensionnel du contour de l'obstacle, comprend :

- dans le choix d'angles de lignes tangentes, la substitution d'une valeur d'angle polaire actuelle définie dans l'équation de la circonférence d'expansion dans le système de coordonnées polaires et la résolution des valeurs de vecteur de rayon pour un point d'arc ; l'extraction d'une valeur plus petite à partir des valeurs de vecteur de rayon pour obtenir des coordonnées polaires du point d'arc pris en sandwich par les lignes tangentes,
- la définition d'une prochaine valeur d'angle polaire et le retour pour exécuter l'étape de substitution de la valeur d'angle polaire actuelle définie dans l'équation de la circonférence d'expansion dans le système de coordonnées polaires, jusqu'à ce que le calcul du point de coordonnée d'arc sur un segment d'arc pris en sandwich par les lignes tangentes soit terminé ;
- la formation de la limite d'expansion du point bidimensionnel actuel sur la base du point d'arc.

9. Procédé selon la revendication 8,

- dans lequel, la prise du centre de projection du corps du robot mobile sur la surface porteuse comme point de départ pour définir au moins un rayon à angles égaux, comprend en outre : le départ à partir d'une limite d'un champ de vision d'image et la prise du centre de projection du corps du robot mobile sur la surface porteuse comme point de départ pour prendre des rayons à angles égaux pour former des grilles,
- dans lequel la formation de la limite d'expansion du point bidimensionnel actuel sur la base du point d'arc comprend :

  - la prise, s'il n'y a pas de point bidimensionnel du contour d'expansion dans une grille actuelle, d'un point de coordonnées d'arc situé dans la grille parmi les points de coordonnées d'arc calculés comme point bidimensionnel du contour d'expansion pour la grille ;
  - la détermination, s'il existe un point bidimensionnel d'un contour d'expansion existant dans la grille actuelle, qui, à partir du point de coordonnées d'arc situé dans la grille parmi les points de coordonnées d'arc calculés et du point bidimensionnel du contour d'expansion existant, est plus proche du centre de projection du corps du robot mobile sur la surface porteuse, et la prise du point plus proche du centre de projection comme point bidimensionnel du contour d'expansion pour la grille ;
  - la prise des points bidimensionnels des contours d'expansion pour toutes les grilles comme limite d'expansion du point bidimensionnel actuel.

10. Dispositif de détection d'informations d'obstacle pour un robot mobile,
dans lequel
le dispositif comprend :

  - un premier module de conversion de données, configuré pour convertir des données d'image de profondeur en données dans un système de coordonnées du robot mobile ;
  - un second module de conversion de données, configuré pour convertir les données dans le système de coordonnées du robot mobile en une projection dans un plan de déplacement du robot mobile pour obtenir des données bidimensionnelles ;
  - un module de détection, configuré pour détecter les données bidimensionnelles dans un choix d'un itinéraire de déplacement du robot mobile et obtenir les informations d'obstacle sur la base des données bidimensionnelles détectées ; **caractérisé en ce que** le dispositif comprend en outre
  - un module d'acquisition de zone franchissable, configuré pour prendre un centre de projection d'un corps du robot mobile sur une surface porteuse comme point de départ pour définir au moins un rayon à angles égaux et prendre un point bidimensionnel sur le au moins un rayon qui est le plus proche du point de départ comme contour de l'obstacle pour obtenir le ou les points bidimensionnels du contour de l'obstacle,
  définir, pour n'importe quel point bidimensionnel du contour de l'obstacle, une circonférence d'expansion en prenant le point bidimensionnel comme centre d'un cercle et une distance d'extension comme rayon ; obtenir deux lignes tangentes passant par le point de départ et tangentes à la circonférence d'expansion ; prendre un arc pris en sandwich entre les deux lignes tangentes comme limite d'expansion d'un point bidimensionnel du contour de l'obstacle, dans lequel un angle central de l'arc pris en sandwich est inférieur ou égal à 180° et la distance d'extension est au moins la distance maximale entre le centre de projection du corps du robot mobile sur la surface porteuse et le contour ;
  prendre les limites d'expansion de tous les points bidimensionnels du contour de l'obstacle, prendre une enveloppe des limites d'expansion de tous les points bidimensionnels comme points bidimensionnels du contour d'expansion de façon à obtenir une zone franchissable et une zone infranchissable pour le déplacement du robot mobile.

11. Robot mobile,
dans lequel
un corps du robot mobile comprend :

  - une caméra de profondeur installée sur le corps du robot mobile, configurée pour acquérir des données d'image de profondeur ;

- un module de détection d'obstacles, configuré pour convertir les données d'image de profondeur en données dans un système de coordonnées du robot mobile ; convertir les données dans le système de coordonnées du robot mobile en une projection dans un plan de déplacement du robot mobile pour obtenir des données bidimensionnelles ; détecter les données bidimensionnelles dans un choix d'un itinéraire de déplacement du robot mobile ; obtenir des informations d'obstacle sur la base des données bidimensionnelles détectées ;

- un module de commande de déplacement, configuré pour former une instruction de déplacement en fonction des informations d'obstacle ;

- un module actionneur, configuré pour exécuter l'instruction de déplacement,

- **caractérisé en ce que** le module de détection d'obstacles comprend en outre :

un module d'acquisition de zone franchissable, configuré pour prendre un centre de projection d'un corps du robot mobile sur une surface porteuse comme point de départ pour définir au moins un rayon à angles égaux, et prendre un point bidimensionnel sur le au moins un rayon qui est le plus proche du point de départ comme contour de l'obstacle pour obtenir le ou les points bidimensionnels du contour de l'obstacle,

définir, pour n'importe quel point bidimensionnel du contour de l'obstacle, une circonférence d'expansion en prenant le point bidimensionnel comme centre d'un cercle et une distance d'extension comme rayon ; obtenir deux lignes tangentes passant par le point de départ et tangentes à la circonférence d'expansion ; prendre un arc pris en sandwich entre les deux lignes tangentes comme limite d'expansion d'un point bidimensionnel du contour de l'obstacle, dans lequel un angle central de l'arc pris en sandwich est inférieur ou égal à 180° et la distance d'extension est au moins la distance maximale entre le centre de projection du corps du robot mobile sur la surface porteuse et le contour ;

prendre les limites d'expansion de tous les points bidimensionnels du contour de l'obstacle, prendre une enveloppe des limites d'expansion de tous les points bidimensionnels comme points bidimensionnels du contour d'expansion de façon à obtenir une zone franchissable et une zone infranchissable pour le déplacement du robot mobile.

12. Support de stockage lisible par ordinateur,
dans lequel
le support de stockage lisible par ordinateur stocke sur celui-ci des programmes informatiques qui, une fois exécutés par un processeur, amènent le processeur à mettre en oeuvre des étapes de l'un quelconque des procédés de détection d'informations d'obstacle pour un robot mobile selon les revendications 1 à 9.

13. Produit de programme informatique comprenant des instructions,
dans lequel
les instructions, lorsqu'elles sont exécutées sur un ordinateur, amènent l'ordinateur à mettre en oeuvre des étapes de l'un quelconque des procédés de détection d'informations d'obstacle pour un robot mobile selon les revendications 1 à 9.

FIG. 1

Two-dimensional
point cloud

Search
window

Robot

**FIG. 2**

Boundary 1

Two-dimensional
point cloud

Boundary 2

Ray

Robot

**FIG. 3**

Contour of
obstacle

R

r

$\theta_p$

x

y

Robot

**FIG. 4**

Determining a tangent line angle range for
an expansion circumference of a current
two-dimensional point of a contour of
an obstacle — 501

Calculating coordinates of an arc
point sandwiched between tangent
lines on the circumference — 502

Extracting a next
two-dimensional point

NO

Determining whether
all two-dimensional points of the
contour of the obstacle are
extracted? — 503

YES

Screen the two-dimensional points
of the expansion contour from all
arc coordinate points — 504

**FIG. 5**

**FIG. 6**

Two-dimensional
point cloud

Expansion contour

**FIG. 7**

Depth image — Depth camera → Obstacle sensing module — Expansion contour → Movement control module — Movement instruction → Actuator

**FIG. 8**

Depth image data → First data conversion module

Three-dimensional points in a mobile robot coordinate system

Screening module

Three-dimensional points in a moving plane

Second data conversion module

Two-dimensional points in the moving plane

Sensing module

Triggering when avoiding obstacles

Passable area acquisition module — Expansion contour

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910892943
- WO 2018054080 A1
- CN 110202577 A
- US 20050131581 A1